(19) Europäisches Patentamt / European Patent Office / Office européen des brevets

(11) **EP 4 278 898 A1**

(12) **EUROPEAN PATENT APPLICATION**

(43) Date of publication:
**22.11.2023 Bulletin 2023/47**

(21) Application number: **22173867.7**

(22) Date of filing: **17.05.2022**

(51) International Patent Classification (IPC):
*A23G 3/34* (2006.01)        *A23G 3/42* (2006.01)

(52) Cooperative Patent Classification (CPC):
(C-Sets available)
**A23G 3/346; A23G 3/343; A23G 3/42**        (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tiense Suikerraffinaderij N.V.
3300 Tienen (BE)**

(72) Inventor: **Huyghe, Hilde
9982 Sint-Jan-in-Eremo (BE)**

(74) Representative: **Koster, Nico
Tiense Suikerraffinaderij N.V.
Patent Department
Aandorenstraat 1
3300 Tienen (BE)**

(54) **SUCROSE CONTAINING FONDANT POWDER**

(57)    The present invention provides a sucrose containing powder fondant comprising sucrose, and at least 30 wt% of a sum of at least glucose syrup, starch and inulin. It furthermore provides the use of the sucrose containing powder fondant as sugar fondant, icing and/or chocolate filling.

EP 4 278 898 A1

(52) Cooperative Patent Classification (CPC): (Cont.)

C-Sets
**A23G 3/343, A23G 2200/06;
A23G 3/346, A23G 2200/06**

**Description**

**Field of the invention**

The present invention relates to a sucrose containing powder fondant comprising sucrose, and glucose syrup, starch and inulin. The powder can be used in standard powder fondant applications such as sugar fondant, icing and/or chocolate fillings. The present invention furthermore relates to a method for preparing a sucrose containing powder fondant.

**Background of the invention**

Sugar reduction is set to remain a pivotal trend in foods and drinks. Consumers are preferring to eat sugar reduced products, also in products traditionally rich in sugar like cakes, cookies, chocolates etcetera. Consumers are concerned about their sugar consumption. Furthermore, governments are taking action to reduce sugar content in food products, such as for example the introduction of sugar taxes to promote a healthier choice of products. Still, people find taste often more important than health in indulgent food products.

Present sugar powder fondant includes a significant percentage of sugars e.g. 80-90% sugar (generally sucrose and glucose syrup). Reduction of sucrose in sucrose containing powder fondant would therefore be advantageous. Certain current regulations stipulate that the indication "reduced sugar" can only be used where the reduction in content is at least 30% compared to a similar product and the amount of energy of the product is equal to or less than the amount of energy in a similar product.

An additional challenge of reducing the sucrose percentage in sucrose containing powder fondant, whilst retaining suitable processing properties, is that the use of polyols as substitutes for sucrose must often be indicated on the packaging of the product with the warning "excessive consumption may cause laxative effects" when used in amounts greater than 10%.

Accordingly, it would be advantageous to provide alternative compositions. There is furthermore a demand for using these compositions in various indulgent food products.

**Summary of the invention**

It is an object of the present invention to provide a composition that has reduced sucrose content whilst retaining suitable processing conditions and having a great taste.

Accordingly, the present invention provides a sucrose containing powder fondant comprising sucrose, and at least 30 wt% (based on the total of carbohydrates) of a sum of at least glucose syrup, starch and inulin.

The sucrose containing powder fondant of the present invention can perform essentially identical to the full sucrose reference in various application. It uses the same dosage as the known full sucrose versions and the same volume. When used it can exhibit an excellent gloss and a delicious sweetness and can have essentially the full taste of the known full sucrose product.

The present invention also relates to the use of the sucrose containing powder fondant as sugar fondant, icing and/or chocolate filling.

It is also an object of the present invention to provide a method for preparing a sucrose containing powder fondant, by grinding sucrose and glucose syrup to a particle size in the range of from 10 to 20 $\mu$m, and adding inulin and starch.

**Detailed description of the invention**

Unless otherwise defined, all technical and scientific terms used herein have the same meaning as commonly understood by one of ordinary skill in the art to which this invention belongs. The terminology used in the description of the invention herein is for the purpose of describing particular embodiments only and is not intended to be limiting of the invention.

The present invention is thus related to fondant powders. Fondant powders are being used worldwide as a basis for the preparation of for example sugar fondants, icings, glazes and chocolate fillings. The powder is easily mixed with water to form a workable sugar paste. A typical composition of such paste is around 88 to 90 wt% powder fondant and around 10% to 12 wt% of water. For some applications a bit more water might be added. After heating to preferably about 30 to 40°C, it is easy to apply it to all kinds of pastries. It also finds its application in confectionery, where it is used more as a filling in chocolate bars, pralines, etc.

As more and more industrial customers are looking for products with less sugar, at the request of governments, consumers and supermarket chains, we now developed a sucrose containing powder fondant comprising sucrose, and at least 30 wt% (based on the total of carbohydrates) of a sum of at least glucose syrup, starch and inulin. Preferably, the sucrose containing powder fondant comprises at least 37 wt% (based on the total of carbohydrates) of a sum of glucose syrup, starch and inulin. The fondant powder according to the invention can be very similar in its stiffness and elasticity to the original full sucrose fondant powder, while typically having a reduced effect on blood glucose level.

As is known, a carbohydrate is a molecule consisting of carbon (C), hydrogen (H) and oxygen (O) atoms, usually with a hydrogen-oxygen atom ratio of 2:1, with the empirical formula $C_x(H_2O)_y$ (where x may or may not be different from y). The term is synonym to a group that includes monosaccharides, disaccharides, oligosaccharides, and polysaccharides.

Sugar is the generic name for sweet-tasting, soluble carbohydrates, many of which are used in food. Simple sugars, also called monosaccharides, include glucose, fructose, and galactose. Compound sugars, also called disaccharides or double sugars, are molecules made of two bonded monosaccharides; common examples are sucrose (glucose + fructose), lactose (glucose + galactose), and maltose (two molecules of glucose). White sugar is a refined form of sucrose. Disaccharides have 12 carbon atoms, with the general formula $C_{12}H_{22}O_{11}$. The differences in these disaccharides are due to atomic arrangements within the molecule.

Sucrose, a disaccharide, is a sugar composed of glucose and fructose subunits. It is produced naturally in plants and is the main constituent of white sugar. For human consumption, sucrose is typically extracted and refined from either sugarcane or sugar beet. In sucrose, the monomers glucose and fructose are linked via an ether bond between C1 on the glucosyl subunit and C2 on the fructosyl unit. The bond is called a glycosidic linkage. The monomer glucose exists predominantly as a mixture of $\alpha$ and $\beta$ "pyranose" anomers, but sucrose has only the $\alpha$ form. The monomer fructose exists as a mixture of five tautomers, sucrose has only the $\beta$-D-fructofuranose form. Unlike most disaccharides, the glycosidic bond in sucrose is formed between the reducing ends of both glucose and fructose. This linkage generally inhibits further bonding to other saccharide units, and prevents sucrose from spontaneously reacting with cellular and circulatory macromolecules in the manner that glucose and other reducing sugars do.

Sucrose has a glycemic index of 65. It has a relatively low glycemic index; due to its content of fructose, it has a lesser effect on blood glucose levels. Sucrose is digested into its components via the enzyme sucrase.

Glucose syrup is a syrup, often made from the hydrolysis of starch. Glucose belongs to the general group of sugars. Maize (corn) is commonly used as the source of the starch in the US, in which case the syrup is called "corn syrup", but glucose syrup is also made from potatoes and wheat, and less often from barley, rice and cassava. The glucose syrup used in the present invention is a refined and concentrated solution of glucose, maltose and higher saccharides, obtained by hydrolysis of for example starch, preferably wheat, corn, or rice starch. The glucose syrup can be in the liquid or dried form.

Part of the sucrose used in the known powder fondant is replaced by starch. The starch is mainly used for the purpose of thickening the fondant paste, made from the fondant powder of the invention. Suitably, the starch in the substrate composition may include starch from any native source, wherein native indicates a starch in essentially the form as found in nature.

A further part of the sucrose used in the known powder fondant is replaced by inulin. Inulin has been chosen as the properties of inulin enhances the creaminess of the prepared fondant due to the solubility of the fibers. A further advantage is that the fiber enrichment brought by inulin results in a better Nutri-Score. The Nutri-Score is a five-colour nutrition label (A=dark green - B=light green - C=yellow - D=orange - E=red) to simplify the nutritional rating system demonstrating the overall nutritional value of food products (consumer products). This system was selected by the French government in March 2017 to be displayed on food products after it was compared against several labels proposed by industry or retailers. It has also been recommended by Belgian, Spanish, German and Dutch authorities as well as the European Commission and the World Health Organization.

A calculation algorithm is used to determine the value of the Nutri-Score label: the system awards 0 to 10 points for energy value and ingredients that should be limited in the diet, i.e.: saturated fatty acids, sugar and salt; and 0 to 5 points for beneficial ingredients whose consumption should be promoted. These are: fiber, protein, fruits, vegetables, legumes, nuts, and rapeseed oil.

The maximum amount of inulin added according to the invention shoulld preferably be set with a total recommended daily intake of inulin and fibers in mind.

The inulin used in the powder fondant according to the present invention is known as such, and has herein common meaning of being a - usually polydisperse - carbohydrate oligomer or polymer consisting mainly of fructosyl-fructose links with optionally a glucose starting unit. The fructosyl-fructose links in inulin are mainly of the $\beta(2,1)$ type. As used herein, the meaning of the term inulin encompasses as such also the compounds known as oligofructose; typical of oligofructoses is that they are inulin compounds whereby the degree of polymerization (DP) ranges from 2 to 10. In practice, oligofructose is also referred to as fructooligosaccharide; as meant herein, these terms are considered to be synonyms. Thus, inulin is a mixture of oligo- and polysaccharides which are composed of fructose (F) units and which oligo- and polysaccharides may or may not comprise a starting glucose moiety (G). Thus, in the context of the present invention, the term inulin refers to both $GF_n$- (which is Glucose-Fructosen) and Fm- (which is Fructose$_m$) com-

pounds, with n and m being the number of fructose units in the oligo- or polysaccharide and each of n and m ≥2.

As meant herein, the determination of the average degree of polymerization (,AV-DP') in compositions containing inulin is based on AOAC Official Method 997.08 (2013 version, AOAC International):

- As is known, this method first requires the determination of non-inulin related glucose and non-inulin related fructose in the composition: free glucose and fructose concentrations, as well as the concentrations of glucose and fructose deriving from sucrose, starch and/or maltodextrines present in the inulin-containing composition are determined.

- An inulinase treatment of the inulin-containing composition will result in complete enzymatic hydrolysis of the inulin compounds into free glucose and free fructose.

- Subtracting the earlier-determined non-inulin related concentrations of glucose and fructose from the overall fructose and glucose content determined after complete enzymatic hydrolysis of the inulin composition to be analyzed provides the concentrations, in particular weight-percentages, of inulin-related fructose ($F_i$) and inulin-related glucose ($G_i$).

If the inulin in the composition consists of $GF_n$ compounds, AV-DP can be calculated via the formula as given in AOAC 997.08:

$$AV\text{-}DP = [ (F_i/G_i) + 1 ] \tag{1}$$

If however the inulin in the composition is an inulin product that had undergone a partial hydrolysis, for example by treatment with an endo-inulinase, it no longer consists essentially only of $GF_n$ compounds but also has a significant amount of $F_m$ compounds. Formula (1) is then no longer sufficiently accurate and a correction is needed. AOAC 997.08 provides some approximations for the correction; for the purposes of the present invention, however, a different procedure is followed for the correction by working from the principle that AV-DP now consists of two contributions: a contribution from $GF_n$ compounds and a contribution from $F_m$ compounds. Starting from $F_i$ and $G_i$ as determined above, the principle is:

- $F_i$ must be reduced by fructose originating from $F_m$ compounds; then, the contribution of $GF_n$ to AV-DP can be calculated via the principle of formula (1); and

- The contribution of $F_m$ compounds to AV-DP must be determined separately. In doing this, it is assumed (as confirmed by current practice) that the presence and contribution of $F_m$-compounds whereby m is 10 or greater is so small that they can be ignored.

The following steps are taken:

- The amount of $F_m$-compounds with m= 2 to 9 (i.e. $F_2$, $F_3$, $F_4$, $F_5$, $F_6$, $F_7$, $F_8$ and $F_9$) is determined.
  ◦ The method of determiniation is high-temperature capillary gas chromatography (HGC), as disclosed in Joye & Hoebregs, J. AOAC International, vol. 83, no. 4, 2000, pages 1020 to 1025.

- Since AOAC method 997.08 calculates with free glucose and fructose molecules, which have been hydrolysed as compared to their state in inulin, the weights of the non-hydrolyzed compounds as determined via HGC are corrected for the hydrolysis.

- The sum of the - for hydrolysis corrected - weight fractions $F_2$, $F_3$, $F_4$, $F_5$, $F_6$, $F_7$, $F_8$ and $F_9$ is subtracted from $F_i$, thereby identifying the weight fraction of fructose units that are attributable to $GF_n$ compounds.

- The calculation:
  [ ( (Weight fraction of fructose units attributable to $GF_n$ ) / $G_i$ ) +1 ] (2) then yields an average DP of the $GF_n$ portion of the inulin product.

- The sum of the weight of $G_i$ and the - also for hydrolysis corrected - weight of the fraction of fructose units that are attributable to $GF_n$ compounds yields the weight of the fraction that consists of $GF_n$ compounds. Using the result of formula (2), the weight of that fraction is re-calculated into moles of $GF_n$.

- The - for hydrolysis corrected - corrected weights of the fractions of the $F_m$ compounds are re-calculated into moles for each $F_m$ compound separately.

- The total amount of moles of inulin is determined by adding the moles of $GF_n$ to the moles of the various $F_m$ compounds. Based on the total amount of moles of inulin, molar fractions of $GF_n$ and of the individual $F_m$ compounds can be calculated.

- The molar fraction $GF_n$ is multiplied by the result of formula (2) to yield the contribution of $GF_n$ compounds to AV-DP.

- Each individual $F_m$ molar fraction is multiplied by its degree of polymerization DP, thus establishing the contribution of each individual $F_m$ fraction to AV-DP. The sum of the $F_m$-contributions is added to the contribution of GFn compounds to AV-DP, to yield AV-DP as meant in the context of the present invention for inulin products containing a significant amount of $F_m$ compounds.

In a preferred embodiment, the present inulin composition is prepared from chicory inulin, preferably from native chicory inulin, preferably said chicory inulin having a DP from 2 to 70. As is known, inulin from chicory is essentially linear.

Advantageously, the sugar reduced powder fondant comprises inulin having an AV-DP of at least 4.5, more preferably between 4.5 and 15, even more preferably between 4.5 and 12 and even more preferably between 4.75 and 10 or even between 5.0 and 8.0.

The sucrose containing powder fondant comprising sucrose, and at least 30 wt% of a sum of at least glucose syrup, starch and inulin, based on the total of carbohydrates, preferably comprises 40 to 63 wt% of sucrose, more preferably 55 wt% to 62 wt% of sucrose, 5 to 15 wt% of glucose syrup, 10 to 30 wt% of starch and 5 to 15 wt% of inulin, based on the total of carbohydrates.

It is advantageous that the sucrose containing powder fondant comprises starch and inulin in weight ratio of 5:1 to 1:1. Within these ratios the texture and taste performance can closely resemble the known full sugar fondant powders.

Starches are widely used in the food manufacturing industry for processing, and as food thickeners or stabilizers. Suitably, the starch in the substrate composition may include starches from any native source, wherein native indicates a starch in essentially the form as found in nature. More preferably, the starch is selected from rice, corn, pea, potato, wheat, and/or tapioca, even more preferably rice, potato or corn, most preferably rice. Rice starch in the fondant has as advantage that it is a bulky material that typically has no negative impact on the stability of the produced paste in the final product. Also the viscosity and color can remain similar; furthermore, rice is known to be essentially allergen-free.

The starch may be at least partly gelatinized. Processes for pregelatinizing starch are generally known. Starch gelatinization is a process of breaking down the intermolecular bonds of starch molecules in the presence of water and heat, allowing the hydrogen bonding sites (the hydroxyl hydrogen and oxygen) to engage more water. This process irreversibly dissolves the starch granule in water. Water may act as a plasticizer. The pregelatinized starch is generally dried before being packed and transported. Pregelatinized starch may readily be dissolved in cold water.

Pregelatinized starch may be derived from native starch, from chemically crosslinked starch, and from physically modified starch. The term physically modified starch includes starches that have been subjected to a heat/moisture treatment, to annealing, to thermal inhibition, and the like. As meant herein the term physically modified does not encompass pregelatinization.

Chemically modified and physically modified starches are known to provide a high process tolerance, which makes them suitable as food thickeners or stabilizers under more extreme process conditions.

In the process of starch gelatinization, water is first absorbed during heating in the amorphous space of the starch, which leads to swelling of the granule. Water then enters via amorphous regions into the tightly bound areas of double helical structures of amylopectin. At ambient temperatures these crystalline regions do not allow water to enter. Heat causes such regions to become diffuse, the amylose chains begin to dissolve, to separate into an amorphous form and the number and size of crystalline regions decreases. Under the microscope in polarized light starch loses its birefringence and its extinction cross.

Penetration of water thus increases the randomness in the starch granule structure and causes swelling; eventually amylose molecules leach into the surrounding water and the granule structure disintegrates.

The gelatinization temperature of starch depends upon plant type and the process conditions used. Some types of unmodified native starches start swelling at 55 °C, other types at 85 °C. The gelatinization temperature of modified starch depends on, for example, the degree of cross-linking, acid treatment, or acetylation.

Gelatinization can, as is known, be achieved in various ways, including on a drum dryer or in an extruder, making the starch cold-water-soluble. Drum drying is a method used for drying out liquids from raw materials with a drying drum. In the drum-drying process, ingredients are dried over rotating, high-capacity drums that produce sheets of drum-dried product. This product is then milled to a finished flake or powder form. Modern drum drying techniques result in dried ingredients which reconstitute immediately and retain much of their original flavor, color and nutritional value. Some advantages of drum drying include the ability to dry viscous foods which cannot be easily dried with other methods.

In a main preferred embodiment according to the invention, the starch comprises a combination of native starch and pre-gelatinized starch or comprises a combination of modified starch and pre-gelatinized starch. Advantageously, the starch is a combination of native starch and pre-gelatinized starch or is a combination of modified starch and pre-gelatinized starch. More advantageously, the ratio between native starch and pre-gelatinized starch is in the range of from 10:1 to 3:1, even more preferably from 8:1 to 4:1; or the ratio between modified starch and pre-gelatinized starch is in the range of from 10:1 to 3:1, even more preferably from 8:1 to 4:1. The resulting fondant in the final product comprising the pre-gelatinized starch can have a fine quality to obtain a smooth, homogeneous paste as it can at least partly act as a viscosity regulator. It can have a further positive impact on the stability of the paste. The starch may bind released moisture (eg from pastries with cream filling).

Besides the basic components of the fondant, being sucrose, glucose syrup, starch and inulin, more components can be added, for example for coloring or additional flavoring. Preferably, the sucrose containing powder fondant furthermore comprises natural aromas and/or natural colorants and/or natural sweeteners. More preferably, fruit extracts and concentrates, vegetable extracts and concentrates, spirulina extract and concentrate or combinations of these may be provided for coloring and/or flavoring. Suitably further ingredients or additives may be provided such as gums such as acacia gum, locust bean gum, tragacanth; and/or emulsifiers such as soya lecithin, glycerol monostearate.

Advantageously, the composition of the invention does not require the use of polyols at a level that requires warnings to be applied to the food product. Sugar alcohols or polyols may refer to, for example erythritol, galactitol, hydrogenated starch syrups, including maltitol and sorbitol syrups, inositols, isomalt, lactitol, maltitol, mannitol, xylitol and combinations thereof.

Advantageously a powder fondant according to the invention may be provided where all ingredients are considered to be natural, allowing the composition to be a so-called 'clean label' composition.

One of the options to further process the sucrose containing powder fondant into a final product is to add water and/or butter and/or vegetable fats. If water is added it can be used for example to glaze donuts, cakes or cookies. If butter and/or vegetable fats are being added, it might be used for filling chocolates or bonbons. If water is being added to the sucrose containing powder fondant it is preferably in the amount of in the range of 8 to 20 wt% in relation to the total weight of the dry materials. The total amount of fats added to the sugar reduced powder fondant is preferably in the range of from 30 to 50 wt% in relation to the total weight of the dry materials, more preferably in the range of from 40 to 45 wt%.

The present invention is thus also directed to the use of the sucrose containing powder fondant, as sugar fondant, icing and/or chocolate filling.

According to a further aspect of the invention there is provided a method for preparing a sucrose containing fondant, by grinding sucrose and glucose syrup to a particle size in the range of from 10 to 20 $\mu$m, and adding inulin and starch.

Advantageously, the relative amounts used in the method for preparing the sucrose containing powder fondant are 50 to 63 wt% of sucrose, 5 to 15 wt% of glucose syrup, 10 to 30 wt% of starch and 5 to 15 wt% of inulin, based on the total of carbohydrates. Preferably, the mutual ratio of the starch and inulin are a weight ratio of 5:1 to 1:1.

Preferably, the starch in the method for preparing the sugar reduced powder fondant is selected from rice, corn, pea, potato, wheat, tapioca and/or canna starch, preferably rice or corn. More preferably, the starch is rice starch and/or gelatinized rice starch.

The following, non-limiting examples are provided to illustrate the invention.

**Example 1**

In a sugar reduced powder fondant according to the invention at least 30 % sucrose (as compared to the known conventional powder fondant) was replaced by starch and inulin.

Table 1: Ingredients

|  | Conventional powder fondant (wt%) | Sugar reduced powder fondant (wt%) |
|---|---|---|
| Sucrose | 90 | 61.25 |
| Glucose syrup (from wheat starch) | 10 | 9.15 |
| Native rice starch (B7, supplier: Beneo Remy) | 0 | 18.0 |
| Pregelatinized rice starch (XS-DRP, supplier: Beneo Remy) | 0 | 3.3 |
| Inulin (AV-DP: 5.2) | 0 | 8.3 |

Table 2: Nutritional properties

| | Conventional powder fondant (wt%) | Sugar reduced powder fondant (wt%) |
|---|---|---|
| Energy | 1591 kJ / 375 kCal | 1692 kJ / 398 kCal |
| Fat | 0 | 0.1 |
| Carbohydrates | 99.9 | 89.9 |
| Sugars | 91.3 | 63.1 |
| Starch | 0 | 18.8 |
| Dietary fiber | 0 | 7.1 |
| Protein | 0 | 0.1 |
| Salt | 0 | 0.07 |
| Nutriscore | D | C |

The Nutri-Score is a five-colour nutrition label (A=dark green - B=light green - C=yellow - D=orange - E=red) to simplify the nutritional rating system demonstrating the overall nutritional value of food products (consumer products).

A calculation algorithm is used to determine the value of the label: the system awards 0 to 10 points for energy value and ingredients that should be limited in the diet, i.e.: saturated fatty acids, sugar and salt; and 0 to 5 points for beneficial ingredients whose consumption should be promoted. These are: fiber, protein, fruits, vegetables, legumes, nuts, and rapeseed oil.

The sugar reduced powder fondant according to the invention can be processed in the same way as the standard powder fondant, although the powder-water ratios may differ slightly to obtain the same viscosity. The recipe for the preparation of a fondant based on the sugar reduced fondant powder of this Example 1 is to add 13 wt% handwarm water to the sugar reduced paste; by comparison, 11 wt% handwarm water should be added to the known conventional fondant powder to obtain a similar product.

**Example 2**

An internal taste panel was organized in which the panel members received the sugar reduced version of Example 1 and the conventional version of Example 1, both in powder form. They had to prepare the pastes themselves according to the above recipe and to carry out the application on donuts. They were asked to rate the following three parameters on a scale from 1 to 5:

| | | |
|---|---|---|
| Gloss | 1: not glossy/dull - | 5: glossy |
| Opacity of the fondant | 1: more transparent - | 5: opaque |
| Stickiness | 1: dry surface - | 5: sticky surface |

The panel consisted of 29 persons. The average score for those three parameters are presented in Table 3.

Table 3: Scoring of fondant by taste panel

| | Known powder fondant | Sugar reduced powder fondant |
|---|---|---|
| Gloss of the fondant | 4 | 3.4 |
| Opacity of the fondant | 4 | 3.9 |
| Stickiness of the fondant | 2.7 | 2.4 |

Conclusion:
The paste made from the sugar reduced powder fondant according to the invention is comparable with the paste made from the known standard powder fondant on opacity and on stickiness, and has nearly the same gloss. The sugar reduced powder fondant has an essentially identical performance as the standard powder fondant.

**EP 4 278 898 A1**

**Claims**

1. A sucrose containing powder fondant comprising sucrose and at least 30 wt%, based on the total of carbohydrates, of a sum of at least glucose syrup, starch and inulin.

2. The sucrose containing powder fondant according to claim 1, comprising at least 37 wt% of a sum of at least glucose syrup, starch and inulin.

3. The sucrose containing powder fondant according to claim 1 or 2, comprising 40 to 63 wt% of sucrose, preferably 55 wt% to 62 wt% of sucrose, 5 to 15 wt% of glucose syrup, 10 to 40 wt% of starch and 5 to 15 wt% of inulin.

4. The sucrose containing powder fondant according to any of the preceding claims, wherein the starch and inulin are provided in weight ratio of 5:1 to 1:1.

5. The sucrose containing powder fondant according to any of the preceding claims, wherein the starch is selected from rice, corn, pea, potato, wheat, and/or tapioca, preferably rice, potato or corn, more preferably rice.

6. The sucrose containing powder fondant according to claim 5, wherein the starch comprises a combination of native starch and pre-gelatinized starch or comprises a combination of modified starch and pre-gelatinized starch.

7. The sucrose containing powder fondant according to claim 6, wherein the ratio between native starch and pre-gelatinized starch is in the range of from 10:1 to 3:1, preferably from 8:1 to 4:1, or the ratio between modified starch and pre-gelatinized starch is in the range of from 10:1 to 3:1, preferably from 8:1 to 4:1.

8. The sucrose containing powder fondant according to any of the preceding claims, wherein the inulin has an average degree of polymerization AV-DP of at least 4.5, more preferably between 4.5 and 15, even more preferably between 4.5 and 12, even more preferably between 4.75 and 10 and most preferably between 5.0 and 8.0.

9. The sucrose containing powder fondant according to any of the preceding claims, furthermore comprising natural aromas and/or natural colorants and/or natural sweeteners.

10. The sucrose containing powder fondant according to any of the preceding claims, wherein furthermore water and/or butter and/or vegetable fats is added.

11. The sucrose containing powder fondant according to claim 10, wherein the amount of water added is in the range of 8 to 20 wt% in relation to the total weight of the dry materials.

12. The sucrose containing powder fondant according to claim 10, wherein the total amount of fats added is in the range of from 30 to 50 wt% in relation to the total weight of the dry materials, preferably in the range of from 40 to 45 wt%.

13. Use of the sucrose containing powder fondant according to claims 10 to 12, as sugar fondant, icing and/or chocolate filling.

14. Method for preparing a sucrose containing powder fondant, by grinding sucrose and glucose syrup to a particle size in the range of from 10 to 20 $\mu$m, and adding inulin and starch.

15. The method for preparing a sucrose containing powder fondant according to claim 14, comprising 50 to 63 wt% of sucrose, 5 to 15 wt% of glucose syrup, 10 to 40 wt% of starch and 5 to 15 wt% of inulin, based on the total of carbohydrates.

16. The method for preparing a sucrose containing powder fondant according to claim 14 or 15, wherein the starch and inulin are provided in weight ratio of 5:1 to 1:1.

17. The method for preparing a sucrose containing powder fondant according to claims 14 to 16, wherein the starch is selected from rice, corn, pea, potato, wheat, tapioca and/or canna starch, preferably rice or corn.

18. The method for preparing a sucrose containing powder fondant according to claims 14 to 17, wherein the starch is rice starch and gelatinized rice starch.

Europäisches
Patentamt

European
Patent Office

Office européen
des brevets

## EUROPEAN SEARCH REPORT

Application Number

EP 22 17 3867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/128848 A1 (MILLER KARL RICHARD [GB] ET AL) 30 April 2020 (2020-04-30) | 1-13 | INV. A23G3/34 A23G3/42 |
| Y | * paragraphs [0001] – [0078]; claims; examples * | 14-18 | |
| X | WO 2017/122212 A1 (D Y SELIGMAN CONSULTING LTD [IL]) 20 July 2017 (2017-07-20) | 1-13 | |
| Y | * pages 1-14; claims; examples * | 14-18 | |
| Y | US 5 455 059 A (MCFEATERS RICHARD [US]) 3 October 1995 (1995-10-03) * columns 1-8; claims; examples * | 1-18 | |
| Y | WO 94/21826 A1 (SUCROS OY [FI]; YLI KYYNY MAURI [FI] ET AL.) 29 September 1994 (1994-09-29) * pages 1-11; claims; examples * | 1-18 | |
| Y | US 2020/296989 A1 (BIASOTTO MARCIO JOSÉ [BR]) 24 September 2020 (2020-09-24) * pages 1-3; claims * | 1-18 | TECHNICAL FIELDS SEARCHED (IPC) |
| A | US 2013/309370 A1 (WALTER THOMAS [DE] ET AL) 21 November 2013 (2013-11-21) * pages 1-6; claims; examples * | 1-18 | A23G |

The present search report has been drawn up for all claims

| Place of search | Date of completion of the search | Examiner |
|---|---|---|
| The Hague | 10 October 2022 | Boddaert, Peter |

EPO FORM 1503 03.82 (P04C01)

## EP 4 278 898 A1

### ANNEX TO THE EUROPEAN SEARCH REPORT
### ON EUROPEAN PATENT APPLICATION NO.

EP 22 17 3867

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2022

| Patent document cited in search report | | Publication date | Patent family member(s) | | Publication date |
|---|---|---|---|---|---|
| US 2020128848 | A1 | 30-04-2020 | EP | 3641556 A1 | 29-04-2020 |
| | | | US | 2020128848 A1 | 30-04-2020 |
| | | | WO | 2018234802 A1 | 27-12-2018 |
| WO 2017122212 | A1 | 20-07-2017 | CA | 3010062 A1 | 20-07-2017 |
| | | | CN | 108471768 A | 31-08-2018 |
| | | | EP | 3402338 A1 | 21-11-2018 |
| | | | IL | 260109 A | 31-07-2018 |
| | | | US | 2018310587 A1 | 01-11-2018 |
| | | | WO | 2017122212 A1 | 20-07-2017 |
| US 5455059 | A | 03-10-1995 | CA | 2117868 A1 | 16-04-1995 |
| | | | US | 5455059 A | 03-10-1995 |
| WO 9421826 | A1 | 29-09-1994 | AT | 197175 T | 15-11-2000 |
| | | | AU | 6259494 A | 11-10-1994 |
| | | | DE | 69426195 T2 | 17-05-2001 |
| | | | EP | 0690930 A1 | 10-01-1996 |
| | | | FI | 931231 A | 20-09-1994 |
| | | | WO | 9421826 A1 | 29-09-1994 |
| US 2020296989 | A1 | 24-09-2020 | BR | 102019005212 A2 | 06-10-2020 |
| | | | US | 2020296989 A1 | 24-09-2020 |
| US 2013309370 | A1 | 21-11-2013 | AU | 2011348468 A1 | 11-07-2013 |
| | | | BR | 112013015993 A2 | 19-06-2018 |
| | | | CA | 2822252 A1 | 28-06-2012 |
| | | | CL | 2013001808 A1 | 14-03-2014 |
| | | | CN | 103269602 A | 28-08-2013 |
| | | | DE | 102010055577 A1 | 21-06-2012 |
| | | | EA | 201390912 A1 | 30-10-2013 |
| | | | EP | 2654445 A1 | 30-10-2013 |
| | | | ES | 2638042 T3 | 18-10-2017 |
| | | | JP | 6453204 B2 | 16-01-2019 |
| | | | JP | 2014500027 A | 09-01-2014 |
| | | | JP | 2016052325 A | 14-04-2016 |
| | | | JP | 2018007678 A | 18-01-2018 |
| | | | KR | 20130113508 A | 15-10-2013 |
| | | | KR | 20160091430 A | 02-08-2016 |
| | | | KR | 20170068609 A | 19-06-2017 |
| | | | MX | 351058 B | 29-09-2017 |
| | | | US | 2013309370 A1 | 21-11-2013 |
| | | | WO | 2012084148 A1 | 28-06-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOYE ; HOEBREGS.** *J. AOAC International,* 2000, vol. 83 (4), 1020-1025